# EUROPÄISCHE PATENTSCHRIFT

(11) **EP 0 658 261 B1**
(45) Veröffentlichungstag und Bekanntmachung des Hinweises auf die Patenterteilung: **29.05.1996**
(21) Anmeldenummer: 93919183.9
(22) Anmeldetag: 26.08.1993
(51) Int. Cl.: G06T 9/20, G06T 5/00

(54) **VERFAHREN UND VORRICHTUNG ZUR ERSTELLUNG VON LINIENDATEN**
PROCESS AND DEVICE FOR GENERATING LINE DATA
PROCEDE ET DISPOSITIF DE GENERATION DE DONNEES DE LIGNES

(30) Priorität: 04.09.1992 DE 4229647
(43) Veröffentlichungstag der Anmeldung: 21.06.1995
(73) Patentinhaber: EDS ELECTRONIC DATA SYSTEMS (DEUTSCHLAND) GMBH, D-65428 Rüsselsheim (DE); WISCHNIK, Arthur, D-81541 München (DE); SPEIDEL, Erik, D-63457 Hanau (DE)
(72) Erfinder: WISCHNIK, Arthur, D-81541 München (DE); SPEIDEL, Erik, D-63457 Hanau (DE); NALEPA, Ernst, D-65428 Rüsselsheim (DE)
(74) Vertreter: Dreiss, Fuhlendorf & Steimle Patentanwälte
(86) Internationale Anmeldenummer: EP9302301
(87) Internationale Veröffentlichungsnummer: WO9406089

(56) Entgegenhaltungen:
- EP-A- 0 334 230
- D.H. BALLARD & C.M. BROWN 'Computer Vision' 1982 , PRENTICE HALL , ENGLEWOOD CLIFFS, US
- COMPUTERS AND GRAPHICS Bd. 9, Nr. 1 , 1985 , OXFORD GB Seiten 69 - 70 P.REHWALD 'VDAFS-an interface to transfer surface description data between CAD systems'
- SOFTWARE KURIER FUER MEDIZINER UND PSYCHOLOGEN Bd. 4, Nr. 3 , 1991 , GERMANY Seiten 98 - 105 WISCHNIK A 'Dreidimensionale Rekonstruktion auf der Basis segmentierender bildgebender Verfahren.'
- D.H. BALLARD & C.M. BROWN 'Computer Vision' 1982 , PRENTICE HALL , ENGLEWOOD CLIFFS, US, pages 119-148

## Beschreibung

Die Erfindung betrifft ein Verfahren und eine Vorrichtung zur Erstellung von Liniendaten.

Derartige Verfahren werden insbesondere bei der Konstruktion von Kraftfahrzeugen eingesetzt, um die geometrischen Konturen eines Fahrzeugkarosserie-Modelles in Liniendaten umzusetzen, welche dann mittels CAD-Verfahren weiterverarbeitet werden können. Hierzu ist vorgesehen, daß das maßstabgetreue Modell mittels einer als Meßwertaufnehmer dienenden Koordinatenmeßmaschine abgetastet wird. Aus diesen meßpunktweise erfassten Geometriedaten des Modells wird ein Gittermodell erstellt. Aus diesem werden schließlich die Liniendaten erzeugt. Dieses bekannte Verfahren besitzt eine Reihe von Nachteilen, die seine Einsatzmöglichkeiten beträchtlich limitieren: Um mit zufriedenstellender Genauigkeit die Konturen des abgetasteten Modells wiedergeben zu können, ist es erforderlich, daß die die Koordinatenmeßmaschine bedienende Person über hinreichende Erfahrung verfügt: Die Auswahl der Abstastpunkte ist nämlich im Hinblick auf die Qualität der zu erzeugenden Liniendaten äußerst kritisch und muß für jedes Modell erneut in Abhängigkeit von der abzutastenden Oberfläche festgelegt werden. Es bedarf daher für jeden Einzelfall komplizierter Überlegungen bezüglich der Position der auszuwählenden Meßpunkte, die hohe Anforderungen an das Bedienungspersonal stellen. Das bekannte Verfahren ist daher nachteiligerweise äußerst zeitaufwendig: Von der Modellherstellung über das Abtasten bis zum Vorliegen der Daten in einer computercodierten Form vergehen in der Regel etwa sechs Monate, wobei die reine Datenerfassung und Datenumwandlung etwa drei Monate in Anspruch nimmt. Eine derart lange Vorbereitungszeit ist aber bei dem gegenwärtig herrschenden Konkurrenzdruck in der Automobilindustrie, welcher sich in der Devise "fast to market" niederschlägt, nicht nur unwirtschaftlich, sondern auch nicht mehr tolerabel.

Desweiteren tritt bei dem bekannten Verfahren der Nachteil auf, daß es nur für relativ einfach geformte Außenflächen praktikabel ist. Denn die mechanische Abtastung der in Liniendaten umzusetzenden Oberfläche bedingt, daß die ausgewählten Meßpunkte einer mechanischen Sonde zugänglich sind. Dies ist aber bei komplizierter geformten Oberflächen mit einer Vielzahl schmaler Vertiefungen - wie z.B. bei einem Wärmetauscher eines Kühlers - nur äußerst schwierig oder nicht mehr möglich.

Aus der DE 38 18 534 und der DE 39 21 093 ist ein Verfahren zum Darstellen der ortsaufgelösten Verteilung von physikalischen Größen auf einer Anzeige sowie eine Vorrichtung zur Durchführung dieses Verfahrens bekannt. Bei diesem Verfahren werden in einem ersten Verfahrensschritt mittels eines Meßwertaufnehmers mit spezifischen Kenngrößen eines Meßobjekts korrelierte Meßwerte meßpunktweise erfaßt. Die vom Meßwertaufnehmer erzeugten analogen Ausgangssignale werden in Digitalwerte umgewandelt. Diese Digitalwerte werden dann in einem jedem Meßwertaufnehmer zugeordneten Speicherplatz eines Meßwertspeichers gespeichert. Aus den in dem Meßwertspeicher gespeicherten Digitalwerten wird ein der örtlichen Anordnung der Meßwerte entsprechendes erstes Bild in Matrixform mit einzelnen Quadraten der Seitenlänge s erzeugt. Aus ein Pixeldatenfeld bildenden Pixelwerten wird ein zweites Bild in Matrixform mit einzelnen Quadraten der Seitenlänge b = s/2ⁿ erzeugt, wobei das Meßdatenfeld und das Pixeldatenfeld übereinandergelegt gedacht werden. Darauffolgend wird für jeden Pixel des Pixeldatenfeldes ein Pixelwert aus den diesen Pixel im Pixeldatenfeld zentrisch umgebenden quadratischen Umgebungsbereich dadurch berechnet, daß jeder von dem Umgebungsbereich im Meßdatenfeld erfaßte und dort gespeicherte Digitalwert mit dem umfaßten Flächenanteil durch Multiplikation in Form eines Produkts gewichtet wird, die Summe aller Produkte gebildet und diese - ggf. durch die Summe aller Flächenanteile des Umgebungsbereichs als Quotient geteilter - Summe in den Pixelspeicher an der betreffenden Stelle gespeichert wird.

In nachteiliger Art und Weise wird bei dem bekannten Verfahren durch diese Mittelwertbildung über einen definierten quadratischen Umgebungsbereich des betreffenden Pixels eine Verschmierung der durch die entsprechenden Digitalwerte repräsentierten Meßwerte erzeugt, welche in äußerst nachteiliger Art und Weise die Auflösbarkeit benachbarter Meßpunkte drastisch verringert.

Der derart gebildete Quotient wird in dem Pixelspeicher an der betreffenden Stelle gespeichert und jedes einem Pixel entsprechende Bit wird ausgelesen und ein vorgebbares Bit wird an bestimmter Stelle des Bits an der entsprechenden, diesem Pixel zugeordneten Stelle in einem ersten Bitspeicher abgespeichert. Der Inhalt des Bitspeichers wird als Flächen gleicher Ortsgröße angezeigt. Durch eine weiter logische Verknüpfung lassen sich Linien gleicher Ortsgröße durch Auslesen eines zweiten Bitspeicher erhalten.

Das bekannte Verfahren besitzt nicht nur - wie bereits oben erwähnt - den Nachteil, daß bei seiner Durchführung eine drastische Verringerung der Auflösungsgenauigkeit durch die Mittelwertbildung über die in einer definierten quadratischen Umgebung um den zu verarbeitenden Meßpunkt des Meßwertfeldes liegenden Meßwerte, die bei der Generierung der den einzelnen Pixel des Pixeldatenfeldes zuzuordnenden Pixelwerte vorgenommen wird, auftritt. Es ist deshalb bei dem bekannten Verfahren in nachteiliger Art und Weise aufgrund der nur niedrigen Auflösung nicht möglich, feine Strukturen des Meßwertfeldes aufzulösen und wiederzugeben. Ein weiterer Nachteil dieses bekannten Verfahrens besteht vielmehr darin, daß es nicht möglich ist, die im Meßwertfeld abgespeicherten Meßwerte auf das Vorliegen vordefinierter Korrelationen hin zu untersuchen: Bei dem bekannten Verfahren wird stets die oben beschriebene Mittelwertbildung zur Zuordnung von Meßwert und Pixelwert verwendet, so daß es in nachteiliger Art und Weise nicht möglich ist, die im Meßwertfeld abgespeicherten Meßwerte selektiv zu die vorgegebenen Korrelationsbedingung repräsentierenden Linien zusammenzufassen. Ein weiterer Nachteil des bekannten Verfahrens ist darin zu sehen, daß durch die zur Darstellung der Linien gleicher Ortsdichte durchzuführenden Verfahrensschritte ein Informationsverlust dergestalt auftritt, daß die Positionszuordnung zwischen einem Meßpunkt des Meßdatenfeldes, der eine bestimmte örtliche Position des zugeordneten Meßwertaufnehmers repräsentiert, und den auf dem Monitor darzustellenden Pixel des Pixeldatenfeldes nicht mehr eindeutig gegeben ist. Es ist daher bei dem bekannten Verfahren in nachteiliger Art und Weise nicht mehr möglich, die ursprüngliche räumliche Position der durch die Linien gleicher Ortsgröße auf dem Bildschirm dargestellten Meßwerte zu rekonstuieren. Dadurch scheidet eine Weiterverarbeitung der durch diese Linien repräsentierten Meßpunkte von vorne herein aus.

In der Zeitschrift "Surface Rendering: Investigation of Medical 3D-Rendering Algorithms", März 1990, S. 41 ff. sind unterschiedliche Methoden zur Visualisierung von durch Computertomographen oder mittels NMR-Verfahren gewonnener Querschnittsdaten durch den menschlichen Körper beschrieben. Die darin aufgezeigten Visualisierungsalgorithmen sowie die darin beschriebenen Korrelationsbedingungen zur Analyse der Meßdaten erlauben wiederum lediglich eine visuelle Darstellung der Meßdaten auf einem Bildschirm, wobei auch hier die räumliche Korrelation zwischen ursprünglichen Meßwert und dem auf dem Bildschirm dargestellten Pixel im Verlaufe der Verfahrensdurchführung verloren geht.

Aus der US-A-4,958,378 ist ein Verfahren und eine Vorrichtung zur Durchführung eines Echtzeitvergleichs von Bildpunkten zweier Fenster einer Benutzeroberfläche einer Datenverarbeitungsanlage bekannt. Hierbei ist vorgesehen, daß beim Wechseln von einem Fenster zum darauffolgenden Fenster nur diejenigen Bildpunkte neu geschrieben werden, die sich beim Übergang vom ersten zum zweiten Fenster ändern. Um diese Auffrischung des Monitors besonders rasch durchführen zu können, ist bei dem aus der US-PS bekannten Verfahren vorgesehen, daß die Bildpunkte des ersten Fensters derart in einem Speicher eingeschrieben werden, daß jeder eine definierte X/Y-Koordinate des Bildschirms repräsentierende Pixelwert auf einem vordefinierten Speicherplatz des Speichers abgespeichert wird, daß jedes Pixel des zu erzeugenden zweiten Fensters mit dem der entsprechenden Bildschirmposition zugeordneten Pixel des ersten Fensters durch einen Komparator verglichen wird, und daß bei einem Unterschied der Pixelwerte eines Bildpunktes des ersten und des zweiten Rasters die Identifikation dieser X/Y-Koordinate des Bildschirms aufgezeichnet wird, um anzuzeigen, daß beim Auffrischen des Bildschirms dieses Pixel geändert werden muß.

Zur Vermeidung der eingangs genannten Nachteile stellt sich die Erfindung die Aufgabe, ein Verfahren zu schaffen, das eine raschere und einfachere Erzeugung von Liniendaten erlaubt. Außerdem soll eine zur Durchführung des erfindungsgemäßen Verfahrens geeignete Vorrichtung geschaffen werden.

Diese Aufgabe wird erfindungsgemäß durch ein Verfahren gelöst, bei dem in einem ersten Verfahrensschritt mittels eines Meßwertaufnehmers mit spezifischen Kenngrößen eines Meßobjekts korrelierte Meßwerte meßpunktweise erfaßt werden, sowie eine Vorrichtung zur Durchführung des Verfahrens, bei dem in einem zweiten Verfahrensschritt meßpunktweise eine Meßwert-Codierung der im ersten Verfahrensschritt erfaßten Meßwerte durchgeführt wird, daß diese codierten MeBwerte in einer orientierten Matrix abgespeichert werden, wobei die Zuordnung eines Meßpunktes zu einem Element der orientierten Matrix in Abhängigkeit von der durch diesen Meßpunkt repräsentierten geometrischen Punktkoordinaten erfolgt, bei dem in einem dritten Verfahrensschritt von einem als Startpunkt fungierenden Element dieser orientierte Matrix eine Identifikation von Codierungsdifferenzen zwischen der dem Startpunkt zugeordneten Codierung und der Codierung jeweils eines in einer definierten Umgebung um den Startpunkt liegenden Vergleichelements der orientierten Matrix durchgeführt wird, indem ein die jeweilige Codierungsdifferenz repräsentierendes Differenzsignal abgeleitet wird, und bei dem dieses Differenzsignal dahingehend analysiert wird, ob die Codierungsdifferenz dieser beiden Elemente der orientierten Matrix einer vordefinierten Korrelation entspricht, daß bei gegebener Korrelation ein Indexsignal erzeugt wird, durch das dieses Vergleichselement mit einem Index versehen wird, und bei dem die durch die vorstehend angeführten Teilschritte des dritten Verfahrensschrittes festgelegte Teilschritt-Sequenz iterativ wiederholt wird, wobei als Startpunkt einer neuen Teilschritt-Sequenz ein in den vorhergehenden Teilschritt-Sequenzen indiziertes Element der orientierten Matrix verwendet wird, bei dem in einem vierten Verfahrensschritt ein Suchlauf über die indizierten Elemente der orientierten Matrix durchgeführt wird und die durch diese Elemente repräsentierten geometrischen Punktkoordinaten des Meßobjekts ermittelt werden, und bei dem in einem fünften Verfahrensschritt die derart ermittelten Punktkoordinaten zu Linien verbunden und zur Darstellung gebracht werden.

Die entsprechende Vorrichtung ist in Anspruch 21 offenbart. Durch die erfindungsgemäßen Maßnahmen wird in besonders vorteilhafter Art und Weise ein Verfahren geschaffen, das nicht nur in besonders vorteilhafter Art und Weise eine einfache und rasche Umsetzung von meßpunktweise erfaßten Meßwerten in Liniendaten erlaubt. Vielmehr ermöglicht es das erfindungsgemäße Verfahren, diese Liniendaten unabhängig vom jeweiligen Meßobjekt vollautomatisch zu erstellen. In vorteilhafter Art und Weise ist vorgesehen, daB die vom Meßwertaufnehmer meßpunktweise erfaßten, mit spezifischen Kenngrößen des Meßobjekts korrelierten Meßwerte in eine entsprechende Meßwert-Codierung umgesetzt und in einer orientierten Matrix abgespeichert werden. Die erfindungsgemäß vorgesehene Meßwert-Codierung erlaubt in vorteilhafter Art und Weise eine einfachere Bearbeitung der vom Meßwertaufnehmer erfaßten Meßwerte in den dieser Codierung folgenden Verfahrensschritten. Die im dritten Verfahrensschritt iterativ in einer wiederholten Folge von Teilschritt-Sequenzen durchgeführte Identifikation von Codierungssprüngen oder Codierungsintervallen zwischen dem jeweiligen Startpunkt der betreffenden Teilschritt-Sequenz und dem jeweiligen Vergleichselement sowie die Korrelationsprüfung zwischen diesen beiden Elementen der orientierten Matrix erlaubt in Verbindung der danach stattfindenden Indizierung der korrelierten Vergleichspunkte besonders einfach die automatische Selektion derjenigen Meßpunkte, welche einem bestimmten Linienzug zuzuordnen sind. Das erfindungsgemäße Verfahren erlaubt es somit in vorteilhafter Art und Weise, automatisch aus unkorreliert vorliegenden Meßpunkten diejenigen zu selektieren, welche zu Liniendaten zusammenzufassen sind. Von besonderem Vorteil ist außerdem, daß nach der Durchführung des Suchlaufs über die inizierten Elemente der orientierten Matrix die durch diese Elemente repräsentierten geometrischen Punktkoordinaten des Meßobjekts, welche die Liniendarstellung festlegen, unmittelbar vorliegen. In vorteilhafter Art und Weise ist somit eine definierte und eineindeutige Zuordnung zwischen den geometrischen Positionen der im ersten Verfahrensschritt erfaßten Meßwerten und den im letzten Verfahrensschritt vorliegenden, die vorgegebene Korrelationsbedingung erfüllenden Meßwerten gewährleistet, so daß die Positionsdaten der derart selektierten Meßwerte in besonders vorteilhafter Art und Weise unmittelbar weiterverarbeitet werden können.

Eine vorteilhafte Weiterbildung der Erfindung sieht vor, daß vor dem Suchlauf über indizierte Elemente der orientierten Matrix mindestens eines derselben einer Interpolation unterworfen wird, bei der dieses Element in eine Anzahl von Subelementen aufgespaltet wird, denen jeweils die ursprüngliche Codierung zugeordnet wird. Diese Maßnahme besitzt den Vorteil, daß bei dem daran anschließenden Suchlauf über die indizierten Elemente der orientierten Matrix ein verfeinertes Raster indizierter Elemente zur Verfügung steht, wodurch in vorteilhafter Art und Weise eine höhere Genauigkeit bei der dem Suchlauf nachfolgenden Zusammenfassung der indizierten Elemente zu den Linienzügen erzielbar ist.

Eine weitere vorteilhafte Weiterbildung der Erfindung sieht vor, daß vor dem fünften Verfahrensschritt indizierte Elemente der orientierten Matrix eliminiert werden, deren Abweichung von den ihnen zugeordneten Linien unter einem vorgegebenen Grenzwert liegt. Diese Maßnahme erlaubt es in vorteilhafter Art und Weise, redundante Elemente zu eliminieren. Dadurch wird vorteilhafterweise eine Reduktion der zur Reproduktion der erfindungsgemäß erstellten Linienzüge nicht erforderlichen Elemente der ortientierten Matrix erreicht.

Eine weitere vorteilhafte Weiterbildung der Erfindung sieht vor, daß nach dem fünften Verfahrensschritt die Polygonzüge zu Spline-Kurven verarbeitet werden, indem Spline-Funktionen erstellt werden, welche die erfindungsgemäß ermittelten Punktkoordinaten approximieren. Dies besitzt den Vorteil einer einfacheren Darstellung der erfindungsgemäß erstellten Linienzüge.

Eine weitere vorteilhafte Weiterbildung der Erfindung sieht vor, daß als Meßwertaufnehmer ein Kernspintomograph, ein Computertomograph oder ein Sonograph verwendet wird. Diese Maßnahme besitzt den Vorteil, daß dadurch in besonders einfacher Art und Weise nicht nur eine meßpunktweise Erfassung der Außenflächen des Meßobjekts ermöglicht wird. Vielmehr ist es durch die vorstehend genannten Meßwertaufnehmer in vorteilhafter Art und Weise möglich, auch innenliegende Flächen oder Strukturen zu erfassen, wodurch sich der Anwendungsbereich des erfindungsgemäßen Verfahrens drastisch erweitert.

Eine weitere vorteilhafte Weiterbildung der Erfindung sieht vor, daß die Meßwert-Codierung derart durchgeführt wird, daß jedem Meßpunkt ein definierter Grauwert zugeordnet wird. Dies hat den Vorteil, daß bei der Meßwert-Codierung auf bekannte Bildpunkt-Erzeugungssysteme zurückgegriffen werden kann.

Weitere vorteilhafte Weiterbildungen der Erfindung ergeben sich aus den Unteransprüchen.

Weitere Einzelheiten der Erfindung sind dem nachfolgenden Ausführungsbeispiel zu entnehmen, das im folgenden anhand der Zeichnungen beschrieben wird. Es zeigt:

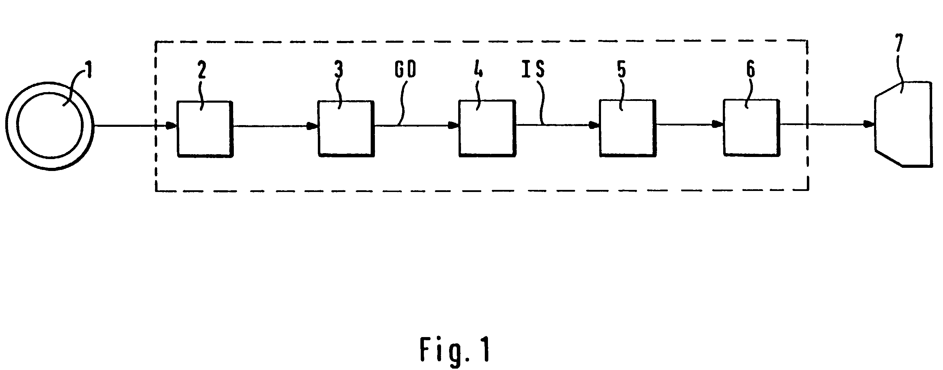

- Figur 1: eine schematische Darstellung eines Ausführungsbeispiels einer Vorrichtung zur Durchführung des Verfahrens.

Ein Ausführungsbeispiel des Verfahrens zur Umsetzung von Meßwerten in Liniendaten wird im folgenden anhand der in Figur 1 dargestellten Vorrichtung beschrieben.
In einem ersten Schritt des Verfahrens werden die später in Liniendaten umzusetzenden Meßwerte eines in Figur 1 nicht dargestellten Meßobjekts gewonnen. Hierzu ist vorgesehen, daß die Meßwertaufnahme durch einen an sich bekannten Kernspintomographen 1 erfolgt. Eine derartige Meßwertaufnahme mittels des Kernspintomographen 1 ist an sich bekannt, so daß sich weitere Ausführungen hierzu erübrigen. Es soll lediglich angeführt werden, daß am Ende einer jeden vom Kernspintomographen 1 durchgeführten segmentierenden Messung einer Querschnittsebene das Meßobjekt ein vom Auflösungsvermögen des Kernspintomographen abhängiges äquidistantes Raster von Meßpunkten dieser Querschnittsebene vorliegt, wobei jedem Meßpunkt der derart gebildeten Meßpunkt-Matrix definerte geometrische Punktkoordinaten zugeordnet sind und unterschiedliche Meßwerte der einzelnen Meßpunkte der Meßpunkt-Matrix einer unterschiedlichen Materiedichte des Meßobjekts entsprechen.

Die Verwendung eine Kernspintomographen sowie die Erfassung der Materiedichte ist keine zwingenden Voraussetzungen für die Durchführung des Verfahrens. So ist es ebenfalls möglich, einen Computertomographen oder ein nach dem Ultraschall-Verfahren arbeitendes Gerät, also ein Sonograph, zur Meßwertaufnahme einzusetzen und mit diesen die durch diese Geräte erfaßbaren spezifischen Kenngrößen des Meßobjekts zu erfassen. Diese drei genannten Verfahren besitzen jedoch den Vorteil, daß eine kontaktlose, nicht-invasive und damit zerstörungsfreie Erfassung sowohl der äußeren Konturen als auch in besonders vorteilhafter Art und Weise eine Identifikation der inneren Strukturen des Meßobjekts durchführbar ist. Die Verwendung eines berührungslos arbeitenden Meßwertaufnehmers besitzt außerdem den Vorteil, daß hiermit auch die Erfassung von Oberflächen oder Strukturen oder von Trennschichten oder Trennflächen nicht nur von festen, sondern auch von flüssigen oder gasförmigen Meßobjekten möglich ist.

Es ist aber auch möglich, bekannte mechanische oder optische Abtastverfahren zu verwenden. Wichtig ist im Hinblick auf den verwendeten Meßwertaufnehmer nur, daß jeder aufgenommene Meßpunkt mit einer definierten geometrischen Raumposition korreliert ist, und daß der an diesem Meßpunkt gewonnene Meßwert charakteristisch für eine bestimmte Kenngröße des Meßobjekts ist.

Für jede einzelne Querschnittsebene werden dann folgende Verfahrensschritte ausgeführt:

In einem zweiten Verfahrensschritt werden die vom Kernspintomographen 1 erzeugten und ggf. in einer geeigneten Form zwischengespeicherten Meßwerte in einer Wandler-/ Codiereinheit 2 digitalisiert und in bekannter Art und Weise in Bildpunkte umgewandelt, indem jedem Meßpunkt ein entsprechender Grauwert zugeordnet wird, dessen Graustufe dem Meßwert des Meßpunktes entspricht. Die einzelnen derart gebildeten Bildpunkte werden dann in Form einer orientierten Bildpunkt-Matrix abgespeichert, wobei die Zuordnung eines codierten Meßwertes zu einem Element der orientierten Bildpunkt-Matrix in Abhängigkeit von den durch diesen Bildpunkt repräsentierenden geometrischen Punktkoordinaten erfolgt.

Anstelle der oben beschriebenen Codierung der Meßwerte durch die Zuordnung eines definierten und zum jeweiligen Meßwert korrelierten Grauwerts ist es auch möglich, eine andere Art der Meßwert-Codierung vorzunehmen. Wesentlich ist nur, daß dem jeweiligen Meßwert der einzelnen Meßpunkte der Meßpunkt-Matrix eine definierte Codierung zugeordnet wird, die charakteristisch für den dem jeweiligen Meßwert des Meßpunkts ist. Vorzugsweise soll eine gewählte Codierung der Meßwerte auch eine einfache Durchführung der nachstehend genannten Verfahrensschritte ermöglichen.

In einem dritten Verfahrensschritt wird die Identifikation von Grauwert-Sprüngen bzw. von Grauwert-Intervallen benachbarter Bildpunkte der orientierten Bildpunkt-Matrix durchgeführt. Hierzu dient eine Komparatoreinheit 3 der Vorrichtung. In einem ersten Teilschritt des dritten Verfahrensschrittes wird ein Bildpunkt der Bildpunkt-Matrix als Startpunkt definiert. Die Auswahl dieses Startpunktes kann dabei derart erfolgen, daß die Identifikation von Grauwert-Sprüngen oder von Grauwert-Intervallen unabhängig vom Meßobjekt stets von einem definierten Startpunkt - z.B. vom linken oberen Bildpunkt der Bildpunkt-Matrix - aus durchgeführt wird. Es ist aber auch möglich, meßobjektabhängig oder -unabhängig von einem definierten anderen Bildpunkt der Bildpunkt-Matrix auszugehen. Desweiteren ist es denkbar, daß der als Startpunkt fungierende Bildpunkt der Bildpunkt-Matrix von Fall zu Fall willkürlich ausgewählt wird.

Ausgehend vom derart festgelegten Startpunkt werden von der Komparatoreinheit 3 in einem zweiten Teilschritt des dritten Verfahrensschrittes die Grauwerte der dem Startpunkt benachbarten Bildpunkte der Bildpunkt-Matrix mit dem Grauwert des Startpunktes verglichen. Unter dem Begriff "benachbarte Bildpunkte" werden hierbei diejenigen Bildpunkte verstanden, die in einer definierten Umgebung um den Startpunkt liegen. So ist es möglich, hierzu nur die vier dem Startpunkt am nächsten liegenden Bildpunkt der orientierten Bildpunkt-Matrix (rechts, links, oben, unten bezüglich des Startpunktes) heranzuziehen. Desweiteren ist es denkbar, anstelle dieser vier Bildpunkte oder in Ergänzung hierzu die vier am zweitnächsten zum Startpunkt liegenden Bildpunkte der Bildpunkt-Matrix zur Identifikation der zwischen diesen Bildpunkten auftretenden Grauwert-Differenzen heranzuziehen, etc.

Die Komparatoreinheit 3 vergleicht nun jeweils den Grauwert des Startpunktes mit dem Grauwert eines benachbarten Bildpunktes der Bildpunkt-Matrix und erzeugt bei jedem Vergleich ein Grauwert-Differenzsignal GD, welches charakteristisch für die Grauwert-Differenz dieser beiden Bildpunkte ist.

Dieses Grauwert-Differenzsignal GD wird einer Differenzsignal-Auswerteeinheit 4 zugeführt. Diese analysiert das von der Komparatoreinheit 3 erzeugte Grauwert-Differenzsignal GD dahingehend, ob die Differenz des Grauwertes des Startpunktes und des Grauwertes des Vergleichs-Bildpunktes einer vorgegebenen Korrelation entspricht. Diese vom Anwendungszweck des Verfahrens abhängige und zweckorientiert vorgegebene Korrelation kann insbesondere darin bestehen, daß gefordert wird, daß die beiden Grauwerte innerhalb vorgegebener Toleranzen übereinstimmen. Eine derartige Korrelationsvorgabe ist insbesondere dann von Vorteil, wenn Liniendaten erzeugt werden sollen, welche zusammenhängenden Strukturen entsprechen:

Der als Meßwertaufnehmer fungierende Kernspintomograph 1 ordnet Materiebereiche gleicher Dichte gleiche Grauwerte zu, so daß alle in einem bestimmten Materiebereich liegenden Meßpunkte den gleichen Grauwert besitzen. Es ist daher durch die Korrelationsbedingung "gleicher Grauwert" möglich, verschiedene Elemente des Meßobjekts zu identifizieren, welchen dann ein definierter Linienzug zuzuordnen ist.

Ist die jeweils geforderte Korrelation erfüllt, so erzeugt die Differenzsignal-Auswerteeinheit 4 ein Index-Steuersignal IS, welches eine Indizierung des jeweiligen Vergleichs-Bildpunktes in der orientierten Bildpunkt-Matrix bewirkt.

In einem vierten Teilschritt des dritten Verfahrensschrittes werden die Signalverarbeitungsoperationen des dritten Teilschritts mit der Maßgabe wiederholt, daß als neuer Startpunkt ein Bildpunkt der Bildpunkt-Matrix verwendet wird, welcher im dritten Teilschritt durch die Differenzsignal-Auswerteeinheit 4 mittels des von ihr erzeugten Index-Steuersignales IS indiziert wurde. In weiteren daran anschließenden Teilschritten des dritten Verfahrensschrittes wird die beschriebene Teilschritt-Sequenz der Teilschritte 3 und 4 des dritten Verfahrensschritts iterativ solange wiederholt, bis entweder kein die geforderte Korrelationsbedingung erfüllender Bildpunkt der Bildpunkt-Matrix in der vordefinierten Umgebung um den jeweiligen Startpunkt des betreffenden Teilschrittes liegt oder bis der allererste Startpunkt des iterativen Verfahrens, also der in der ersten Teilschritt-Sequenz des dritten Verfahrensschritts herangezogene Startpunkt wiederum erreicht wird. Der erstgenannte Fall bedeutet, daß der Startpunkt dieses Teilschrittes des dritten Verfahrensschrittes den Endpunkt der zu erzeugenden Linie darstellt. Der zweitgenannte Fall repräsentiert die Situation, daß die zu erzeugende Linie eine in sich geschlossene Linie ist.

In einem vierten Verfahrensschritt wird ein Suchlauf über Bildpunkte gleicher oder korrelierter Codierung, also über die im dritten Verfahrensschritt durch die Differenzsignal-Auswerteeinheit 4 indizierten Bildpunkte der orientierten Bildpunkt-Matrix durchgeführt. Hierzu ist vorgesehen, daß eine Bildpunkt-Auswerteeinheit 5 sequentiell die Bildpunkte der Bildpunkt-Matrix auf eine Indizierung durch die Differenzsignal-Auswerteeinheit 4 untersucht. Die den gefundenen indizierten Bildpunkten zugeordneten geometrischen Punktkoordinaten werden bestimmt.

In einem fünften Schritt des Verfahrens werden die im vierten Verfahrensschritt bestimmten Punktkoordinaten einer Interpolationseinheit 6 zugeführt, welche die einzelnen Punktkoordinaten durch Linien verbindet. Die derart gebildeten Polygonzüge werden auf einem Monitor 7 dargestellt.

In einem sechsten Verfahrensschritt werden die im dritten und vierten Verfahrensschritt beschriebenen Signalverarbeitungsoperationen mit der Maßgabe wiederholt, daß als neuer Startpunkt ein Bildpunkt der Bildpunkt-Matrix verwendet wird, der in den jeweils vorhergehenden Verfahrensschritten nicht als Startpunkt des iterativen Verfahrens definiert wurde.

Der letztgenannte Verfahrensschritt wird nun solange wiederholt, bis alle Bildpunkte der Bildpunkt-Matrix durch die vorstehend beschriebenen Verfahrensschritte ausgewertet wurden. Die derart definierte Vorgehensweise - also die sofortige Darstellung eines Linienzugs vor der Auswertung der verbleibenden Bildpunkte der Bildpunkt-Matrix - besitzt den Vorteil, daß eine relativ einfache Art der Indizierung ausreichend ist, um aus den zu einem Linienzug gehörigen Punktkoordinaten den Linienzug selbst zu ermitteln.

Alternativ dazu kann vorgesehen werden, daß zuerst alle in der Bildpunkt-Matrix enthaltenen Linienzüge ermittelt werden, und daß daran anschließend sämtliche Linienzüge gleichzeitig auf dem Monitor 7 dargestellt werden. In diesem Fall muß das von der Differenzsignal-Auswerteeinheit 4 erzeugte Index-Signal IS nicht nur - wie im erstbeschriebenen Fall - ein die Reihenfolge des jeweils indizierten Punktes im zu erstellenden Linienzug des repräsentierenden ersten Index enthalten. Vielmehr ist es dann erforderlich,daß neben diesem ersten Index ein zweiter Index erzeugt wird, welcher die Zugehörigkeit des Vergleichs-Bildpunktes zu einer bestimmten Linie aus der Vielzahl der zu ermittelnden Linien enthält.

Es ist natürlich auch möglich, die oben beschriebenen Verfahrensschritte nur für die Bildpunkte einer Submatrix der orientierten Bildpunkt-Matrix oder für eine bestimmte Auswahl von Zeilen und Spalten derselben - z.B. nur für jede zweite Spalte und Reihe - durchzuführen.

Eine Weiterbildung des Ausführungsbeispiels sieht vor, daß vor dem oben beschriebenen vierten Verfahrensschritt eine Interpolation von Bildpunkten durchgeführt wird. Hierbei ist vorgesehen, daß mindestens ein indizierter Bildpunkt - also mindestens ein indiziertes Element der Bildpunkt-Matrix - abhängig vom gewünschten Auflösungsgrad in vier oder neun oder sechzehn, etc. "Unterbildpunkte" - also Subelemente - identischen Grauwerts aufgespaltet wird. Diese Maßnahme hat den Vorteil, daß bei dem im vierten Verfahrensschritt durchgeführten Suchlauf über benachbarte Bildpunkte gleicher Codierung ein verfeinertes Raster indizierter Bildpunkte zur Verfügung steht, wodurch eine höhere Genauigkeit erzielbar ist.

Außerdem kann noch vorgesehen sein, daß vor dem fünften Verfahrensschritt indizierte Bildpunkte eliminiert werden, d.h. es werden Punktkoordinaten eliminiert, welche zu einer genaueren Wiedergabe der Linienstruktur nichts beitragen, da ihre Abweichung von den ihnen zugeordneten, jeweils durch die Interpolationseinheit 6 bestimmten Linien unter einer vogegebenen Grenzwert liegt.

Außerdem kann vorgesehen sein, daß in dem fünften Verfahrensschritt die Polygonzüge mittels der Interpolationseinheit 6 zu Spline-Kurven verarbeitet werden, indem Spline-Funktionen erstellt werden, welche die Punktkoordinaten approximieren.

Daran kann sich ein weiterer Verfahrensschritt anschließen, der darin besteht, daß die Punktkoordinaten und/oder die Spline-Funktionen in ein CAD-Datenformat, insbesondere in das VDAFS-Datenformat umgewandelt werden.

Ein optionaler weiterer Verfahrensschritt besteht darin, daß aus jeweils vier einander zugeordneten Kurven automatisch Flächenelemente (Patches) erzeugt werden. Es ist dann von Vorteil, die Flächenelemente und die dadurch festgelegten Flächen in ein CAD-Datenformat, insbesondere wieder in das VDAFS-Format umzuwandeln.

Ein optionaler weiterer Verfahrensschritt besteht darin, daß die im letztgenannten Verfahrensschritt erzeugten Flächenelemente zu sog. "Makropatches" zusammengefügt werden.

Zusammenfassend ist festzustellen, daß sich das beschriebene Verfahren und die dazugehörige Vorrichtung in besonders vorteilhafter Art und Weise zur Erzeugung von Liniendaten aus Meßpunkten eignet. Das Verfahren ist insbesondere im Konstruktionsbereich und bei der Qualitätssicherung und Werkstoffprüfung universell einsetzbar.

Abschließend soll noch angeführt werden, daß sich das beschriebene Verfahren nicht nur für eine zweidimensionale Querschnittsebene durch das Meßobjekt einsetzen läßt. Vielmehr ist es auch möglich, Liniendaten dreidimensional zu erzeugen. Dem Fachmann sind die hierfür erforderlichen Modifikationen aus obiger Beschreibung leicht ersichtlich. Der Vollständigkeit halber sei noch ausgeführt, daß die wesentliche Modifikation darin besteht, beim Vergleich der Elemente der in diesem Fall dreidimensionierten Matrix anstelle der bisher eingesetzten zweidimensionalen Umgebung um den Startpunkt eine dreidimensionale Umgebung vorzusehen.

Es ist aus den obigen Erläuterungen für den Fachmann ohne weiteres ersichtlich - und bedürfte an und für sich daher gar keiner expliziten Erwähnung -, daß das beschriebene Verfahren auch softwareunterstützt - also mit einem Mikroprozessor oder mit einer Datenverarbeitungsanlage, der die im ersten Verfahrensschritt mittels eines Meßwertaufnehmers gewonnenen und im zweiten Verfahrensschritt wie beschrieben codierten Meßwerte zugeführt werden - durchgeführt werden kann. Die Funktion der beschriebenen Einheiten 2,3,4,5 und 6 wird dann softwareunterstützt realisiert; diese Funktionen werden also vorzugsweise als Funktionsroutinen einer Datenverarbeitungsanlage ausgeführt.

## Patentansprüche

1. Verfahren zur Vollautomatischen Erstellung von Liniendaten, bei dem in einem ersten Verfahrensschritt mittels eines Meßwertaufnehmers (1) mit spezifischen Kenngrößen eines Meßobjekts korrelierte Meßwerte meßpunktweise erfaßt werden, bei dem in einem zweiten Verfahrensschritt meßpunktweise eine Meßwert-Codierung der im ersten Verfahrensschrift erfaßten Meßwerte durchgeführt wird, dadurch gekennzeichnet daß diese codierten Meßwerte in einer orientierten Matrix abgespeichert werden, wobei die Zuordnung eines Meßpunktes zu einem Element der orientierten Matrix in Abhängigkeit von der durch diesen Meßpunkt repräsentierten geometrischen Punktkoordinaten erfolgt, bei dem in einem dritten Verfahrensschritt von einem als Startpunkt fungierenden Element dieser orientierte Matrix eine Identifikation von Codierungsdifferenzen zwischen der dem Startpunkt zugeordneten Codierung und der Codierung jeweils eines in einer definierten Umgebung um den Startpunkt liegenden Vergleichelements der orientierten Matrix durchgeführt wird, indem ein die jeweilige Codierungsdifferenz repräsentierendes Differenzsignal (GD) abgeleitet wird, bei dem dieses Differenzsignal (GD) dahingehend analysiert wird, ob die Codierungsdifferenz dieser beiden Elemente der orientierten Matrix einer vordefinierten Korrelation entspricht, daß bei gegebener Korrelation ein Indexsignal (IS) erzeugt wird, durch das dieses Vergleichselement mit einem Index versehen wird, und bei dem die durch die vorstehend angeführten Teilschritte des dritten Verfahrensschrittes festgelegte Teilschritt-Sequenz iterativ wiederholt wird, wobei als Startpunkt einer neuen Teilschritt-Sequenz ein in den vorhergehenden Teilschritt-Sequenzen indiziertes Element der orientierten Matrix verwendet wird, bei dem in einem vierten Verfahrensschritt ein Suchlauf über die indizierten Elemente der orientierten Matrix durchgeführt wird und die durch diese Elemente repräsentierten geometrischen Punktkoordinaten des Meßobjekts ermittelt werden, und bei dem in einem fünften Verfahrensschritt die derart ermittelten Punktkoordinaten zu Linien verbunden und zur Darstellung gebracht werden.

2. Verfahren zur Erstellung von Liniendaten nach Anspruch 1, dadurch gekennzeichet, daß vor der Durchführung des vierten Verfahrensschrittes eine Interpolation mindestens eines indizierten Elements der orientierten Matrix durchgeführt wird, bei der dieses Element in eine Anzahl von Subelementen identischer Codierung aufgespaltet wird.

3. Verfahren zur Erstellung von Liniendaten nach Anspruch 1, dadurch gekennzeichnet, daß nach dem fünften Verfahrensschritt mindestens ein indiziertes Element der orientierte Matrix eliminiert wird, dessen Abweichung von der ihm zugeordneten Linie unter einem vorgegebenen Grenzwert liegt.

4. Verfahren zur Erstellung von Liniendaten nach Anspruch 1, dadurch gekennzeichnet, daß in einem dem fünften Verfahrensschritt folgenden weiteren Verfahrensschritt die durch die indizierten Elemente der orientierten Matrix repräsentierten Punktkoordinaten durch Spline-Funktionen approximiert werden.

5. Verfahren zur Erstellung von Liniendaten nach Anspruch 1 oder 4, dadurch gekennzeichnet, daß die Punktkoordinaten und/oder die Spline-Funktionen in ein CAD-Datenformat, insbesondere in das VDAFS-Datenformat, umgewandelt werden.

6. Verfahren zur Erstellung von Liniendaten nach einem der Ansprüche 1 bis 5, dadurch gekennzeichnet, daß aus einander zugeordneten Linien ein Flächenelement erzeugt wird.

7. Verfahren zur Erstellung von Liniendaten nach Anspruch 6, dadurch gekennzeichnet, daß das Flächenelement in ein CAD-Datenformat, insbesondere in ein VDAFS-Datenformat umgewandelt wird.

8. Verfahren zur Erstellung von Liniendaten nach Anspruch 6, dadurch gekennzeichnet, daß die derart erzeugten Flächenelemente zu Makropatches zusammengefügt werden.

9. Verfahren zur Erstellung von Liniendaten nach Anspruch 1, dadurch gekennzeichnet, daß das Index-Signal (IS) einen ersten Index enthält, welcher die Reihenfolge des indizierten Elements der orientierten Matrix in der im fünften Verfahrensschritt zu erstellenden Linie repräsentiert.

10. Verfahren zur Erstellung von Liniendaten nach Anspruch 1, dadurch gekennzeichnet, daß der dritte Verfahrensschritt mit Startpunkten unterschiedlicher Codierung so lange wiederholt wird, bis alle Elemente der orientierten Matrix ausgewertetet sind, und daß daran anschließend alle ermittelten Punktkoordinaten zu entsprechenden Linien verbunden und gleichzeitig zur Darstellung gebracht werden.

11. Verfahren zur Erstellung von Liniendaten nach Anspruch 10, dadurch gekennzeichnet, daß das Index-Signal (IS) zusätzlich zum ersten Index einen zweiten Index enthält, welcher die Zugehörigkeit des jeweiligen Elements zu einer definierten Linie aus der Vielzahl der ermittelten Linien repräsentiert.

12. Verfahren zur Erstellung von Liniendaten nach einem der Ansprüche 1 bis 11, dadurch gekennzeichnet, daß zur Erstellung von Liniendaten nur ein Teilbereich der orientierten Matrix herangezogen wird.

13. Verfahren zur Erstellung von Liniendaten nach einem der Ansprüche 1 bis 12, dadurch gekennzeichnet, daß als Meßwertaufnehmer des Verfahrens ein Kernspintomograph oder ein Computertomograph oder ein Sonograph verwendet wird.

14. Verfahren zur Erstellung von Liniendaten nach einem der Ansprüche 1 bis 13, dadurch gekennzeichnet, daß als Startpunkt des Iterationsprozesses ein vordefiniertes Element der orientierten Matrix verwendet wird.

15. Verfahren zur Erstellung von Liniendaten nach Anspruch 1, dadurch gekennzeichnet, daß die vordefinierte Korrelationsbedingung des dritten Verfahrensschritts derart für zwei Elemente der orientierten Matrix erfüllt ist, wenn diese beiden Elemente im wesentlichen die gleiche Codierung aufweisen.

16. Verfahren zur Erstellung von Liniendaten nach Anspruch 1, dadurch gekennzeichnet, daß die vordefinierte Korrelationsbedingung des dritten Verfahrensschritts für zwei Elemente der orientierten Matrix dann erfüllt ist, wenn sich diese beiden Vergleichselemente um ein definiertes Codierungsintervall unterscheiden.

17. Verfahren zur Erstellung von Liniendaten nach einem der Ansprüche 1 bis 16, dadurch gekennzeichnet, daß die Teilschritt-Sequenz des dritten Verfahrensschrittes iterativ solange wiederholt wird, bis entweder kein die geforderte Korrelationsbedingung erfüllendes Element der orientierten Matrix in der definierten Umgebung um den Startpunkt der jeweiligen Teilschritt-Sequenz liegt oder bis der Startpunkt der ersten Teilschritt-Sequenz erreicht ist.

18. Verfahren zur Erstellung von Liniendaten nach einem der Ansprüche 1 bis 17, dadurch gekennzeichnet, daB als Meßwert-Codierung eine Grauwert-Codierung verwendet wird.

19. Verfahren zur Erstellung von Liniendaten nach einem der Ansprüche 1 bis 18, dadurch gekennzeichnet, daß die definierte Umgebung um den Startpunkt des dritten Verfahrensschrittes eine zweidimensionale oder eine dreidimensionale Umgebung ist.

20. Verfahren zur Erstellung von Liniendaten nach einem der Ansprüche 1 bis 18, dadurch gekennzeichnet, daß zumindest der dritte und der vierte Verfahrensschritt softwareunterstützt ausgeführt werden.

21. Vorrichtung zur Durchführung des Verfahrens nach einem der Ansprüche 1 bis 19 zur Erstellung von Liniendaten, die eine Wandler-/Codierereinheit (2) umfaßt, die die vom Meßwertaufnehmer (1) erzeugten Meßwerte digitalisiert und die Meßwert-Codierung durchführt wobei die codierten Mußwerte abhängig von den durch sie repräsentierten geometrischen Punktkoordinaten in einen orientierten Matrix abgespeichert werden,dadurch gekennzeichnet daß eine Komparatoreinheit (3) vorgesehen ist, die einen Codierung-Vergleich Zwischen einem Start-Matrixelement und einem Vergleichselement durchführt und ein Differenzsignal (GD) erzeugt, daß eine Differenzsignal- Auswerteeinheit (4) vorgesehen ist, welche das von der Komparatoreinheit (3) erzeugte Differenzsignal (GD) entsprechend einer vorgegebenen Korrelation analysiert und bei gegebener Korrelation das Index-Signal (IS) erzeugt wodurch das entsprechende Vergleichselement indiziert wird, daß eine weitere Auswerteeinheit (5) vorgesehen ist, welche die Elemente der orientierten Matrix auf eine Indizierung durch die Differenzsignal-Auswerteeinheit (4) untersucht, und daß eine Interpolationseinheit (6) vorgesehen ist, welche die durch die indizierten Elemente repräsentierten Punktkoordinaten durch Linien verbindet.

22. Vorrichtung nach Anspruch 21, dadurch gekennzeichnet, daß ein Monitor (7) zur Darstellung der erzeugten Liniendaten vorgesehen ist.

23. Vorrichtung nach Anspruch 21, dadurch gekennzeichnet, daß die Komporatoreinheit (3), die Differenzsignal-Auswerteeinheit (4), die weitere Auswerteeinheit (5) und die Interpolationseinheit (6) als Funktionsroutinen einer Datenverarbeitungsanlage realisiert sind.

## Claims

1. A process for fully automatically generating line data in which in a first process step measurement values which are correlated with specific characteristic values of a measurement object are acquired in a measurement point-wise manner by means of a measurement value sensor (1), in which in a second process step measurement value encoding of the measurement values acquired in the first process step is effected in a measurement point-wise manner, characterised in that said encoded measurement values are stored in an oriented matrix, wherein the association of a measurement point with an element of the oriented matrix is effected in dependence on the geometrical point co-ordinates represented by said measurement point, in which in a third process step an element of said oriented matrix, which functions as a start point, provides for identification of encoding differences between the encoding associated with the start point and the encoding of a respective comparison element of the oriented matrix, which is in a defined area around the start point, by deriving a difference signal (GD) representing the respective encoding difference, in which said difference signal (GD) is analysed to ascertain whether the encoding difference between said two elements of the oriented matrix corresponds to a predefined correlation, that with a given correlation an index signal (IS) is produced, by which said comparison element is provided with an index, and in which the substep sequence established by the above-indicated substeps of the third process step is iteratively repeated, wherein the start point of a new substep sequence is an element of the oriented matrix which is indexed in the preceding substep sequence, in which in a fourth process step a search run is performed over the indexed elements of the oriented matrix and the geometrical point co-ordinates of the measurement object which are represented by said elements are ascertained, and in which in a fifth process step the point co-ordinates ascertained in that way are joined to form lines and displayed.

2. A process for generating line data according to claim 1 characterised in that prior to execution of the fourth process step interpolation of at least one indexed element of the oriented matrix is effected, in which said element is divided into a number of sub-elements of identical encoding.

3. A process for generating line data according to claim 1 characterised in that after the fifth process step at least one indexed element of the oriented matrix is eliminated, the deviation of which from the line associated with it is below a predetermined limit value.

4. A process for generating line data according to claim 1 characterised in that in a further process step following the fifth process step the point co-ordinates represented by the indexed elements of the oriented matrix are approximated by spline functions.

5. A process for generating line data according to claim 1 or claim 4 characterised in that the point co-ordinates and/or the spline functions are converted into a CAD-data format, in particular into the VDAFS-data format.

6. A process for generating line data according to one of claims 1 to 5 characterised in that a surface element is produced from mutually associated lines.

7. A process for generating line data according to claim 6 characterised in that the surface element is converted into a CAD-data format, in particular into a VDAFS-data format.

8. A process for generating line data according to claim 6 characterised in that the surface elements which are produced in that way are assembled to form macropatches.

9. A process for generating line data according to claim 1 characterised in that the index signal (IS) includes a first index which represents the succession of the indexed element of the oriented matrix in the line to be generated in the fifth process step.

10. A process for generating line data according to claim 1 characterised in that the third process step is repeated with start points involving different encoding until all elements of the oriented matrix are evaluated, and that then all ascertained point co-ordinates are joined to form corresponding lines and simultaneously displayed.

11. A process for generating line data according to claim 10 characterised in that in addition to the first index the index signal (IS) includes a second index which represents the association of the respective element with a defined line from the plurality of the ascertained lines.

12. A process for generating line data according to one of claims 1 to 11 characterised in that only a portion of the oriented matrix is used for the generation of line data.

13. A process for generating line data according to one of claims 1 to 12 characterised in that a nuclear spin tomograph or a computer tomograph or a sonograph is used as the measurement value sensor of the process.

14. A process for generating line data according to one of claims 1 to 13 characterised in that a predefined element of the oriented matrix is used as the start point of the iteration process.

15. A process for generating line data according to claim 1 characterised in that the predefined correlation condition of the third process step is so fulfilled for two elements of the oriented matrix when those two elements involve substantially the same encoding.

16. A process for generating line data according to claim 1 characterised in that the predefined correlation condition of the third process step is fulfilled for two elements of the oriented matrix when said two comparison elements differ from each other by a defined encoding interval.

17. A process for generating line data according to one of claims 1 to 16 characterised in that the substep sequence of the third process step is iteratively repeated until either no element of the oriented matrix which fulfils the required correlation condition is in the defined area around the start point of the respective substep sequence or until the start point of the first substep sequence is reached.

18. A process for generating line data according to one of claims 1 to 17 characterised in that grey value encoding is used as the measurement value encoding.

19. A process for generating line data according to one of claims 1 to 18 characterised in that the defined area around the start point of the third process step is a two-dimensional or a three-dimensional area.

20. A process for generating line data according to one of claims 1 to 18 characterised in that at least the third and the fourth process steps are carried out with software support.

21. Apparatus for carrying out the process according to one of claims 1 to 19 for the generation of line data which includes a converter/encoder unit (2) which digitises the measurement values produced by the measurement value sensor (1) and which effects measurement value encoding, wherein the encoded measurement values are stored in an oriented matrix in dependence on the geometrical point co-ordinates represented by the measurement values, characterised in that there is provided a comparator unit (3) which effects encoding comparison between a start matrix element and a comparison element and produces a difference signal (GD), that there is provided a difference signal evaluation unit (4) which analyses the difference signal (GD) produced by the comparator unit (3) in accordance with a predetermined correlation and with a given correlation produces the index signal (IS) whereby the corresponding comparison element is indexed, that there is provided a further evaluation unit (5) which examines the elements of the oriented matrix for indexing by the difference signal evaluation unit (4), and that there is provided an interpolation unit (6) which joins the point co-ordinates represented by the indexed elements by lines.

22. Apparatus according to claim 21 characterised in that there is provided a monitor (7) for displaying the line data produced.

23. Apparatus according to claim 21 characterised in that the comparator unit (3), the difference signal evaluation unit (4), the further evaluation unit (5) and the interpolation unit (6) are in the form of function routines of a data processing installation.

## Revendications

1. Procédé de génération entièrement automatique de données de lignes dans lequel, lors d'une première étape de procédé, des valeurs de mesure corrélées avec des grandeurs caractéristiques d'un objet de mesure sont détectées par points de mesure au moyen d'un capteur (1), dans lequel, lors d'une deuxième étape de procédé, un codage des valeurs de mesure détectées lors de la première étape de procédé est effectué par points de mesure, caractérisé en ce que ces valeurs de mesure codées sont enregistrées dans une matrice orientée, l'affectation d'un point de mesure à un élément de la matrice orientée est effectuée en fonction des coordonnées de points géométriques représentées par ce point de mesure, dans lequel, dans une troisième étape de procédé, à partir d'un élément faisant fonction de point de départ de cette matrice orientée, est effectuée une identification de différences de codage entre le codage affecté au point de départ et le codage à chaque fois d'un élément de comparaison de la matrice orientée se trouvant dans un environnement défini autour du point de départ, un signal-différence (GD) représentant à chaque fois la différence de codage étant dérivé, dans lequel ce signal-différence (GD) est analysé pour savoir si la différence de codage des deux éléments de la matrice orientée correspond à une corrélation prédéfinie, en ce que, pour une corrélation donnée, il est produit un signal d'indice (IS) au moyen duquel cet élément de comparaison est indicé, et dans lequel la séquence d'étape partielle fixée par les étapes partielles indiquées ci-dessus de la troisième étape de procédé est répétée par itération, un élément de la matrice orientée ayant été indicé lors des séquences d'étape partielle précédentes étant utilisé comme point de départ d'une nouvelle séquence d'étape partielle, dans lequel, lors d'une quatrième étape de procédé, une recherche de données est effectuée sur les éléments indicés de la matrice orientée, et les points de coordonnées géométriques de l'objet de mesure représentés par ces éléments sont déterminés, et dans lequel, lors d'une cinquième étape de procédé, les coordonnées de point ainsi déterminées sont reliées en lignes et sont transmises à des fins de représentation.

2. Procédé de génération de lignes de données suivant la revendication 1, caractérisé en ce que, avant l'exécution de la quatrième étape de procédé, une interpolation d'au moins un élément indicé de la matrice orientée est effectuée, lors de laquelle cet élément est subdivisé en un certain nombre de sous-éléments de codage identique.

3. Procédé de génération de lignes de données suivant la revendication 1, caractérisé en ce que, après la cinquième étape de procédé, au moins un élément indicé de la matrice orientée est éliminé, la déviation de cet élément par rapport à la ligne qui lui est affectée étant inférieure à une valeur limite prédéterminée.

4. Procédé de génération de lignes de données suivant la revendication 1, caractérisé en ce que, dans une autre étape de procédé suivant la cinquième étape de procédé, les coordonnées de point représentées par les éléments indicés de la matrice orientée sont approchées par des fonctions spline.

5. Procédé de génération de lignes de données suivant la revendication 1 ou 4, caractérisé en ce que les coordonnées de point et/ou les fonctions spline sont converties dans un format de données de CAD, en particulier dans le format de données VDAFS.

6. Procédé de génération de lignes de données suivant l'une des revendications 1 à 5, caractérisé en ce qu'un élément de surface est produit à partir de lignes associées les unes aux autres.

7. Procédé de génération de lignes de données suivant la revendication 6, caractérisé en ce que l'élément de surface est converti dans un format de données de CAD, en particulier dans un format de données VDAFS.

8. Procédé de génération de lignes de données suivant la revendication 6, caractérisé en ce que les éléments de surface produits de cette manière sont assemblés en macropatches.

9. Procédé de génération de lignes de données suivant la revendication 1, caractérisé en ce que le signal d'indice (IS) comporte un premier indice représentant la suite de l'élément indicé de la matrice orientée dans la ligne qui doit être générée lors de la cinquième étape de procédé.

10. Procédé de génération de lignes de données suivant la revendication 1, caractérisé en ce que la troisième étape de processus est répétée avec des points de départ de codage différent, jusqu'à ce que tous les éléments de la matrice orientée soient analysés, et en ce qu'immédiatement après, toutes les coordonnées de point déterminées sont reliées aux lignes correspondantes et sont transmises simultanément à des fins de représentation.

11. Procédé de génération de lignes de données suivant la revendication 10, caractérisé en ce que le signal d'indice (IS) comporte, outre le premier indice, un deuxième indice représentant l'appartenance de chaque élément à une ligne définie parmi la pluralité des lignes déterminées.

12. Procédé de génération de lignes de données suivant l'une des revendications 1 à 11, caractérisé en ce que seule une zone partielle de la matrice orientée est prise en compte pour la génération de données de lignes.

13. Procédé de génération de lignes de données suivant l'une des revendications 1 à 12, caractérisé en ce qu'un tomographe à résonance magnétique nucléaire, ou un scanner, ou un échographe est utilisé en tant que capteur du procédé.

14. Procédé de génération de lignes de données suivant l'une des revendications 1 à 13, caractérisé en ce qu'un élément prédéfini de la matrice orientée est utilisé en tant que point de départ du processus d'itération.

15. Procédé de génération de lignes de données suivant la revendication 1, caractérisé en ce que la condition de corrélation prédéfinie de la troisième étape de procédé est remplie pour deux éléments de la matrice orientée lorsque ces deux éléments présentent essentiellement le même codage.

16. Procédé de génération de lignes de données suivant la revendication 1, caractérisé en ce que la condition de corrélation prédéfinie de la troisième étape de procédé pour deux éléments de la matrice orientée est remplie lorsque ces deux éléments de comparaison se différencient d'un intervalle de codage défini.

17. Procédé de génération de lignes de données suivant l'une des revendications 1 à 16, caractérisé en ce que la séquence d'étape partielle de la troisième étape de procédé est répétée par itération jusqu'à ce qu'aucun élément de la matrice orientée remplissant la condition de corrélation ne se trouve près du point de départ de la séquence respective d'étape partielle dans l'environnement défini, ou jusqu'à ce que le point de départ de la première séquence d'étape partielle soit atteint.

18. Procédé de génération de lignes de données suivant l'une des revendications 1 à 17, caractérisé en ce qu'un codage en niveaux de gris est utilisé comme codage de valeurs mesurées.

19. Procédé de génération de lignes de données suivant l'une des revendications 1 à 18, caractérisé en ce que l'environnement défini autour du point de départ de la troisième étape de procédé est un environnement bidimensionnel ou tridimensionnel.

20. Procédé de génération de lignes de données suivant l'une des revendications 1 à 18, caractérisé en ce qu'au moins la troisième et la quatrième étapes de procédés sont exécutées avec une aide logicielle.

21. Dispositif pour exécuter le procédé suivant l'une des revendications 1 à 19 pour la génération de données de ligne, comportant une unité (2) de codage/conversion qui numérise les valeurs de mesure produites par le capteur (1) et exécute le codage de valeur de mesure, les valeurs de mesure codées étant enregistrées dans une matrice orientée en fonction des coordonnées de point géométriques que ces valeurs représentent, caractérisé en ce qu'une unité (3) de comparateur est prévue pour exécuter une comparaison de codages entre un élément de matrice de démarrage et un élément de comparaison et produire un signal-différence (GD), en ce qu'une unité (4) d'analyse de signal-différence est prévue pour analyser le signal-différence (GD) produit par l'unité (3) de comparateur suivant une corrélation prédéterminée et pour produire le signal d'indice (IS) pour une corrélation donnée, l'élément de comparaison étant alors indicé, en ce qu'une autre unité (5) d'analyse est prévue pour rechercher, au moyen d'une unité (4) d'analyse de signal-différence, une indexation des éléments de la matrice orientée, et en ce qu'une unité (6) d'interpolation est prévue pour relier par des lignes les coordonnées de point représentées par les éléments indicés.

22. Dispositif suivant la revendication 21, caractérisé en ce qu'un moniteur (7) est prévu pour la représentation des données de lignes produites.

23. Dispositif suivant la revendication 21, caractérisé en ce que l'unité (3) de comparateur, l'unité (4) d'analyse de signal-différence, l'autre unité (5) d'analyse et l'unité (6) d'interpolation sont réalisées comme sous-programmes de fonction d'un système informatique.
